Europäisches Patentamt

European Patent Office

Office européen des brevets

(19)

(11) Publication number: **0 063 055**
**B1**

(12) **EUROPEAN PATENT SPECIFICATION**

(45) Date of publication of patent specification: **06.08.86**

(21) Application number: **82301928.6**

(22) Date of filing: **14.04.82**

(51) Int. Cl.⁴: **H 01 R 39/04,** H 01 R 43/06, H 02 K 23/54

(54) **Commutator for flat motor and method of making same.**

(30) Priority: **14.04.81 JP 55134/81**

(43) Date of publication of application:
**20.10.82 Bulletin 82/42**

(45) Publication of the grant of the patent:
**06.08.86 Bulletin 86/32**

(84) Designated Contracting States:
**DE FR GB**

(56) References cited:
DE-A-2 312 646
DE-B-1 284 512
DE-U-7 540 211
GB-A-2 013 415
US-A-3 861 027

(73) Proprietor: **NIHON RADIATOR CO., LTD.**
**24-15, 5-chome Minamidai**
**Nakano-ku Tokyo (JP)**

(73) Proprietor: **TOHO TEKKO CO., LTD.**
**39, 3-chome Hazawa**
**Nerima-ku Tokyo (JP)**

(72) Inventor: **Sawabe, Mitsuo**
**2-25-8, Hashikadai**
**Narita-shi Chiba-ken (JP)**
Inventor: **Imai, Kouichi**
**2-10-40 Kuriya Tama-ku**
**Kawasaki-shi Kanagawa-ken (JP)**

(74) Representative: **Rees, David Christopher et al**
**Kilburn & Strode 30 John Street**
**London WC1N 2DD (GB)**

Courier Press, Leamington Spa, England.

EP 0 063 055 B1

## Description

This invention relates to a commutator for a flat electric motor and its manufacturing process, and more particularly to a commutator for a flat motor having a disc-shaped wound armature, arranged to facilitate connection of the armature winding to the commutator. The invention also relates to the manufacture of such a commutator.

In recent years, there has been proposed a commutator for a flat motor which includes circular sector-shaped brush contact pieces and tabs or connection pieces raised up from said brush contact pieces and electrically integral therewith, wherein a plurality of segments made of good quality conductive material are arranged in an annular form, said segments being insulated from each other by an insulating material, connection wires of an armature winding being pushed into holes made at the top ends of said tabs or connection pieces so as to connect the segments with the armature winding. (US—A—3,524,251).

A further example of a commutator of this type is described as one of the embodiments in GB—A—2 013 415. The commutator there described consists of an annular member of non-conducting resin having spaced metallic commuatator segments on one face; each of these segments includes, at its outer edge, a connector pin which extends axially through the annular member and projects from the far side. At its inner edge, each segment includes a bent portion which is anchored in the resin. Electrical connections are made with the segments via the connector pins. The manufacture of this commutator is as follows: an electrically-conducting flat sheet is first stamped into a suitable blank, comprising an annular shape having inwardly-pointing fingerlike extensions and outwardly-pointing fingerlike extensions. Both of these extensions are then bent until they lie at 90° to the plane of the annulus, and the resin is moulded around the resulting shape so that it is bonded to one side of the sheet with the inner extensions embedded in the resin and the outer ones (the pins) passing through it. Finally, the sheet is cut radially into individual commutator segments.

However, this type of flat commutator shows not only a difficulty in its manufacture; but a restriction on the area which may be occupied by the armature to be formed at the outside of the tab, due to the fact that the tab is formed at an outer edge end of the brush contact piece. In particular, when the armature is fixed to a rotary axis of the fan of a direct drive type, a requirement for making a large effective area of the fan causes some limitations to the diameter of the flat motor. Due to this, it is necessary to position the tab as close as possible to the rotary axis and make a wide distance between an outer diameter of the armature and the tab in order to make a large area for the armature. Since the output of the motor is related to the area of armature, said distance should be increased.

Thus, it is an object of the present invention to provide a novel commutator for a flat motor and its manufacturing process which alleviates these disadvantages.

It is a subsidiary object of the present invention to provide a commutator for a flat motor which may cause the motor to produce a higher output power.

It is a further subsidiary object of the present invention to provide a simple manufacturing process for a commutator for a flat motor.

Accordingly the present invention provides a commutator for a flat electric motor including a plurality of segments made of conductive material arranged in an annular pattern and having sector-shaped brush-contact pieces, and connection pieces raised up from the brush contact pieces and electrically connected therewith, the segments being insulated from each other by an insulating member, and characterised in that the connection pieces are positioned at the inner edges of the segments, and the top ends of the connection pieces are bent to an inverted U-shape, their free ends are buried in the insulating member, slits being made at the top ends of said connection pieces and being adapted to receive connection wires of an armature winding so as to connect the segments with the respective armature windings.

In a further aspect, the invention provides a process for manufacturing a commutator for a flat motor comprising and characterised by the steps of: punching out a central part of a top-hat shaped member of conductive material having a flange part at a lower portion thereof, bending the top part of the hat-shaped member inwardly and downwardly so as to form an annular projection of inverted U-shape cross-section; making slits in a spaced apart relation in said annular projection from its top end down to the surface of the flange so as to form an odd number of connection pieces separated by the slits; moulding an insulating member around the top hat-shaped member, leaving the bottom surface of the flange and the annular projection exposed while burying the free edge of the annular projection into the insulating member, the member extending into said slits; cutting further slits in the flange part of said moulded member in a radial pattern corresponding to said slits so as to form a plurality of fan-shaped divided contact pieces; and forming some wire connection slits at the top ends of said connection pieces.

Figure 1 is a perspective view schematically illustrating an armature for a flat motor embodying the present invention,

Figure 2 is a sectional view taken along the line II—II of Figure 1,

Figure 3 is a sectional view similar to that of Figure 2 illustrating another embodiment of the present invention,

Figures 4 to 8 are a sectional view for illustrating each of the manufacturing steps of the armature embodying the present invention,

Figure 9 is an enlarged view of a part of the commutator of Figure 3 illustrating the connections to the commutator,

Figure 10 is a sectional view taken along the line X—X of Figure 9.

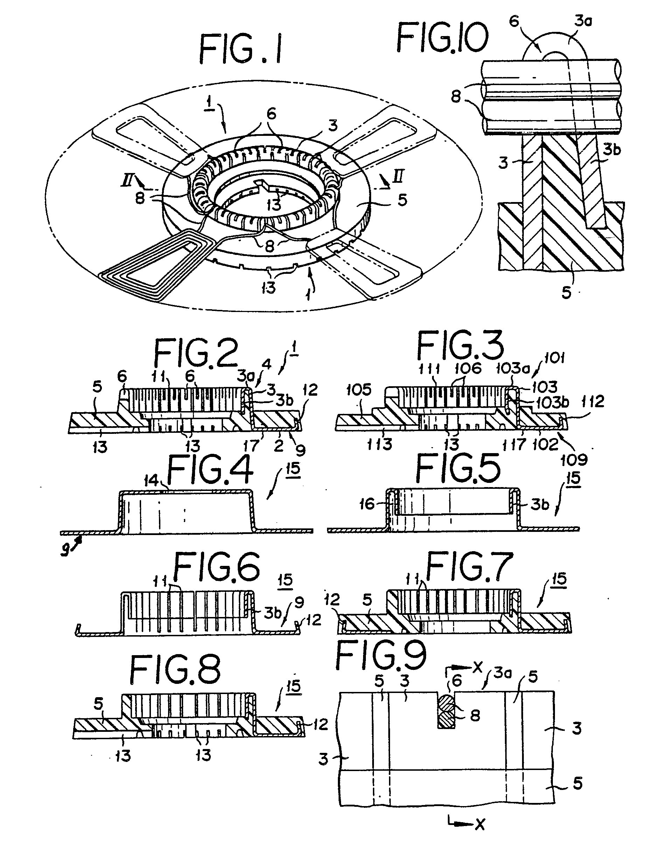

As shown in Figures 1 and 2, segments 4 which constitute a commutator 1 are provided with a fan-shaped brush contact piece 2 and a connector piece 3 raised up from the brush contact piece 2 and electrically integral therewith, the segment being formed of a superior conductive material such as copper or copper alloy etc. The segments 4 are constructed such that an upper end 3a of the connector piece 3 is bent over to form an inverted U-shape, the arms of the U being parallel. A plurality of segments 4 are arranged spaced apart in an annular pattern in such a way that the connector pieces 3 are positioned at their inner edges. A plurality of segments 4 arranged in such annular pattern are moulded in a resin insulating member 5 which is itself of annular form. The outer edge of each segment 4 is formed with a bent part 12 for use in preventing slip or movement of the segment relative to the insulating member. The inverted U-shaped bent edge 3b is buried in the insulating material 5. That part of the insulating material lying within the U-shaped bent portion is moulded integrally with the rest of the moulded member 5. It is possible to fix a reinforcement member (not shown) of copper or copper alloy to this bent portion. Some slits 6 are cut in said U-shaped bent top end 3a. In Figure 2, a left half section corresponds in position to the slits 11, 13 formed between the segments 4.

Figure 3 illustrates another embodiment of the present invention in which a bent end 103b buried in the insulating member 105 is further bent inwards thereinto. In Figure 3, a reference numeral increased by 100 corresponds to the same component element as that shown in Figure 2.

When such segments as described above are manufactured, at first, a sheet of good conductive material, for example a copper sheet having a silver content of 0.03 wt%, is pressed to form a top hat-like member 15 having a hole 14 at its central part and a flange part 9 at its lower portion, as shown in Figure 4. Then, as illustrated in Figure 5, the central hole 14 is drawn inwardly to form a bent part 3b, thereby an annular projection having its top end 3a showing an inverted U-shape cross-section is formed. The width of the space 16 at the bent portion is substantially the same as, for example, that of the copper sheet. Into the space 16 formed by the bent part 3b is, if required, press fitted an annular reinforcement member or another type of annular reinforcement member coated with a conductive adhesive agent. In this condition, some slits 11 are cut, as shown in Figure 6, down to the flange 9 in a spaced apart relation, thus an odd number of connector pieces 3 are formed. Portions corresponding to slits 13 at the circumference of the flange 9 (to be described later) are partially cut out and then the remained non-cut portions are bent upwardly. Thus, said comb-like hat-shaped member 15 forms a continuous body which is connected only at the flange. When the annular reinforcement member is included this also has the slits 11 cut therein and the reinforcement member is thus divided in the same way as the connector pieces 3. Further, as shown in Figure 7, the hat-shaped member 15 having said slits 11 is received into the moulded synthetic resin insulating member 5, which may be formed of, for example, FUDOWLITE F5760F (ammonia free phenolic resin with glass powder made by Fudow Chemical Co., Ltd.) with a bottom surface of the flange 9 being exposed. The insulator member extends into said slits 11, and each of the connector pieces 3 is insulated from each other. Then, as shown in Figure 8, a plurality of slits 13 are cut in a radial pattern in the flange 9, in correspondence with said slits 11, deeper than a thickness of said flange 9, thereby a plurality of fan-shaped divided contact pieces 2 are formed separated from each other. Surfaces of the contact pieces 2 become a brush sliding contact surface 17. Then, as shown in Figures 1 and 2, slits 6 for a wire connection are cut at the top end 3a in the bent part of the connector piece 3 so as to form a commutator 1.

In the commutator 1 thus formed, as shown in Figures 9 and 10, the connecting wires 8 of a winding constituting an armature 7 are pushed into the slits 6, and then they are connected with each other by soldering or by a so-called hot-stake process.

This hot-stake process is operated such that connection wires (enamel coated wires) 8 and the commutator 1 are heated by a hot tip heated up to a desired temperature, the connection wires 8 are pushed into the slits 6 by the hot tip, and at the same time the wires are further heated by their energisation, finally a thermal press fitting is performed. This hot stake process enables a breakage of insulation by applying thermal energy, and also enables both electrical and mechanical connections even if the insulation of the connected wires (enamel coated wires) is peeled off.

As described above, in the present invention, a top end of the connector piece is bent to form an inverted U-shape and buried into the material of the insulating member, so that the strength of the commutator may be improved and it becomes possible to tie the connection wires to the commutator by applying so-called hot-stake process, and a fast rigid connection between the commutator and the armature winding may be performed.

The connector piece has a fixed width irrespective of a fan-shape form of the segment, so that the strength of the commutator may substantially be improved.

In the method of the present invention, the segments are not assembled after manufacture but an integrally formed hat-shaped member is bent, some slits are cut in the member so as to form the connection pieces, then the insulating material is moulded therein, and the flange is cut to make the segments. The manufacture may thus be performed in a quite simple manner.

In the commutator of the present invention, the connector pieces (tab pieces) are formed at the points nearest to the rotary axis, so it is possible to keep a wide distance from an outer edge of said armature to the connector piece even if an outer diameter of the armature is the same of that of a conventional one and therefore the area of the armature may be increased.

**Claims**

1. A commutator (1) for a flat electric motor including a pluraltiy of segments (4) made of conductive material arranged in an annular pattern and having at their outer ends sector-shaped brush-contact pieces (2), and connection pieces (3) raised up from the brush contact pieces (2) and electrically connected therewith, the segments (4) being insulated from each other by an insulating member (5), and characterised in that the connection pieces (3) are positioned at the inner edges of the segments (4), and the top ends (3a) of the connection pieces (3) are bent to an inverted U-shape, their free ends (3b) are buried in the insulating member (5), slits (6) being made at the top ends (3a) of said connection pieces (3) and being adapted to receive connection wires of an armature winding so as to connect the segments (4) to the respective armature windings.

2. A commutator as set forth in Claim 1 in which the radial width of the connection piece (3) is constant.

3. A commutator as set forth in Claim 1 or Claim 2 in which an outer circumferential end of each segment (4) is bent upwardly to prevent movement between the segment (4) and the insulating member (5).

4. A commutator as set forth in Claims 1, 2 or 3 in which the insulating member (5) extends into a space in each connection piece (3) formed by its inverted U-shape.

5. A process for manufacturing a commutator (1) for a flat motor comprising and characterised by the steps of: punching out a central part (14) of a top-hat shaped member (15) of conductive material having a flange part (9) at a lower portion thereof, bending the top part of the hat-shaped member inwardly and downwardly so as to form an annular projection of inverted U-shape cross-section; making slits (11) in a spaced apart relation in said annular projection from its top end down to the surface of the flange (9) so as to form an odd number of connection pieces (3) separated by the slits (11); moulding an insulating member (5) around the top hat-shaped member, leaving the bottom surface of the flange (9) and the annular projection exposed while burying the free edge of the annular projection in the insulating member (5), the member extending into said slits (11); cutting further slits (13) in the flange part of said moulded member in a radial pattern corresponding to said slits (6) so as to form a plurality of fan-shaped divided contact pieces (2); and forming wire connection slits (6) at the top ends of said connection pieces (3).

6. A process as set forth in Claim 5 wherein the circumferential edge of said flange is pratically cut away in correspondence to said slits (13) in the annular projection, before the moulding of the insulating material member (5) is performed, and is bent upwardly so as to make a series of tabs (12) which extend into the insulating member (5) when it is moulded.

7. A process as set forth in Claim 5 wherein the insulation material is formed of a phenol resin.

**Revendications**

1. Un collecteur (1) pour un moteur électrique plat comportant une pluralité de segments (4) formés d'un matériau conducteur et répartis selon un motif annulaire et comportant à leurs extrémités extérieures des parties en contact avec un balai (2) en forme de secteurs, ainsi que des parties de connexion (3) en faisant saillie vers le haut à partir des parties en contact avec un balai (2) et qui leur sont reliées électriquement, les segments (4) étant isolés l'un de l'autre par un élément isolant (5), et caractérisé en ce que les parties de connexion (3) sont positionnées sur les bords intérieurs des segments (4), et les extrémités supérieures (3a) des parties de connexion (3) sont pliées en forme de U inversé, leurs extrémités libres (3b) sont noyées dans l'élément isolant, des fentes (6) étant ménagées aux extrémités supérieures (3a) desdites parties de liaison (3) et étant adaptées pour recevoir des fils de connexion d'un enroulement d'induit afin de relier les segments (4) aux enroulements d'induit respectifs.

2. Un collecteur selon la revendication 1, dans lequel la largeur radiale de la partie de connexion (3) est constante.

3. Un collecteur selon la revendication 1 ou 2, dans lequel une extrémité circonférentielle extérieure de chaque segment (4) est pliée vers le haut pour empêcher un déplacement entre le segment (4) et l'élément isolant (5).

4. Un collecteur selon les revendication 1, 2 ou 3, dans lequel l'élément isolant (5) s'étend dans un intervalle formé dans chaque partie de connexion (3) par sa forme de U inversé.

5. Un procédé de fabrication d'un collecteur (1) pour un moteur plat, comprenant et caractérisé par les étapes consistant à:

— poinçonner une partie centrale (14) d'un élément en forme de chapeau (15), constitué d'un matériau conducteur et comportant une collerette (9) à une partie inférieure,

— plier la partie supérieure de l'élément en forme de chapeau vers l'intérieur et vers le bas afin de former une saillie annulaire à section droite en forme de U inversé;

— réaliser, dans ladite saillie annulaire, des fentes (11) espacées l'une de l'autre s'étendant de son extrémité supérieure vers le bas jusqu'à la surface de collerette (9) afin de former un nombre impair de partie de connexion (3) séparées par les fentes (11);

— mouler un élément isolant (5) autour de l'élément supérieur en forme de chapeau;

— laisser exposée la surface inférieure de la collerette (9) et de la saillie annulaire tout en noyant le bord libre de la saillie annulaire dans l'élément isolant (5), l'élément s'étendant jusque dans lesdites fentes (11);

— découper d'autres fentes (13) dans la partie de collerette dudit élément moulé selon un motif radial correspondant aux fentes précitées (6) afin de former une pluralité de parties de contact (2) divisés en formes d'éventail; et

— former des fentes (6) de connexion de fils aus extrémités supérieures desdites parties de connexion (3).

6. Un procédé selon la revendication 5, dans lequel le bord circonférentiel de ladite collerette est découpé pratiquement en correspondance auxides fentes (13) dans la saillie annulaire avant que le moulage de l'élément en matière isolante (5) ne soit effectué, et est plié vers le haut de façon à former une série de pattes (12) qui s'étendent dans l'élément isolant (5) quand il est moulé.

7. Un procédé selon la revendication 5, dans lequel la matière isolante est formée d'une résine phénolique.

**Patentansprüche**

1. Kommutator (1) für einen Elektroflachmotor, mit einer Vielzahl von Segmenten (4) aus leitfähigem Material, die ringförmig angeordnet und an ihren äußeren Enden mit sektroförmigen Bürstenkontaktstücken (2) versehen sind, und mit Verbindungsstücken (3), die von den Bürstenkontaktstücken (2) aufragen und mit diesen elektrisch verbunden sind, wobei die Segmente (4) voneinander durch ein Isolierglied (5) isoliert sind, dadurch gekennzeichnet, daß die Verbindungsstücke (3) an den inneren Rändern der Segmente (4) angeordnet sind, daß die oberen Enden (3a) der Verbindungsstücke (3) in umgekehrter U-Form gebogen sind, wobei ihre freien Enden (3b) in dem Isolierglied (5) eingebettet sind, und daß Schlitze (6) an den oberen Enden (3a) der Verbindungsstücke (3) angeordnet und zur Aufnahme von Anschlußdrähten einer Rotorwicklung ausgebildet sind, wodurch die Segmente (4) mit zugehörigen Rotorwicklungen verbunden werden.

2. Kommutator nach Anspruch 1, dadurch gekennzeichnet, daß die radiale Dicke des Verbindungsstückes (3) konstant ist.

3. Kommutator nach einem der Ansprüche 1 oder 2, dadurch gekennzeichnet, daß ein äußeres Umfangsende eines jeden Segmentes (4) aufwärts gebogen ist zur Verhinderung von Bewegungen zwischen dem Segment (4) und dem Isolierglied (5).

4. Kommutator nach einem der vorhergehenden Ansprüche, dadurch gekennzeichnet, daß das Isolierglied (5) sich in einen Raum erstreckt, der in jedem Verbindungsstück (3) durch dessen umgekehrte U-Form ausgebildet ist.

5. Verfahren zur Herstellung eines Kommutators (1) für einen Flachmotor, gekennzeichnet durch die folgenden Schritte: Ausstanzen eines mittleren Teiles (14) eines hutförmigen Gliedes (15) aus leitfähigem Material, das einen Flanschteil (9) an einem unteren Teil aufweist, Biegen des oberen Teiles des hutförmigen Gliedes nach innen und unten zur Ausbildung eines ringförmigen Vorsprunges umgekehrt U-förmigen Querschnittes; Einbringen von Schlitzen (11) im Abstand zueinander in den ringförmigen Vorsprung von dessen oberem Ende nach unten bis zur Fläche des Flansches (9) zur Ausbildung einer ungeraden Anzahl von Verbindungsstücken (3), die durch die Schlitze (11) voneinander getrennt sind; Formen eines Isoliergliedes (5) um das hutförmige Glied, wobei die Bodenfläche des Flansches (9) und der ringförmige Vorsprung freigelassen werden, während die freie Kante des ringförmigen Vorsprunges in das Isolierglied (5) eingebettet wird und dieses Glied sich in die Schlitze (11) erstreckt; Einschneiden weiterer Schlitze (13) in den Flanschteil des geformten Gliedes in radialer Anordnung und in Zuordnung zu den Schlitzen (11), zur Ausbildung einer Vielzahl flügelartiger getrennter Kontaktstücke (2); und Herstellung von Drahtanschlußschlitzen (6) an den oberen Enden der Verbindungsstücke (3).

6. Verfahren nach Anspruch 5, dadurch gekennzeichnet, daß der Umfangsrand des Flansches vor dem Formen des Isoliermaterialgliedes -(5) zweckmäßigerweise entsprechend den Schlitzen (13) aufgeschnitten und nach oben gebogen wird zur Herstellung einer Anzahl von Laschen (12), die sich in das geformte Isolierglied (5) erstrecken.

7. Verfahren nach Anspruch 5, dadurch gekennzeichnet, daß als Isoliermaterial Phenolharz verwendet wird.

FIG.1

FIG.10

FIG.2

FIG.3

FIG.4

FIG.5

FIG.6

FIG.7

FIG.8

FIG.9